# EUROPEAN PATENT APPLICATION

(11) **EP 4 242 493 A1**
(43) Date of publication of application: **13.09.2023**
(21) Application number: 23160590.8
(22) Date of filing: 07.03.2023
(51) Int. Cl.: F16H 61/00, F16D 48/02

(54) **HYDRAULIC UNIT AND ASSEMBLY**

(30) Priority: 10.03.2022 DE 102022105647
(71) Applicant: FTE automotive GmbH, 96106 Ebern (DE)
(72) Inventor: BAHR, Philip, D-96106 EBERN (DE)
(74) Representative: Valeo Powertrain Systems

(57) **Abstract**

A hydraulic unit (12) is indicated, comprising a reversing pump (18) which has two pump connections (20, 22) which act as a suction connection and a pressure connection depending on the direction of rotation. The hydraulic unit (12) has at least one suction intake (26) for the intake of hydraulic fluid, wherein, starting from the suction intake (26), a suction line portion (30, 32) extends to each of the pump connections (20, 22), and a non-return valve (38, 40) blocking in the direction towards the suction intake (26) is arranged in each of the suction line portions (30, 32). Starting from a first pump connection (40), a first pressure line (34) extends to a lubricant connection (14) of the hydraulic unit (12), wherein a non-return valve (42) blocking in the direction towards the pump connection is arranged in the first pressure line (34). Starting from a second pump connection (22), a second pressure line (36) leads to an actuator connection (16) of the hydraulic unit (12), wherein the second pressure line (36) is free of valves. Furthermore, an assembly (10) comprising a hydraulic unit (12) is indicated.

## Description

The invention relates to a hydraulic unit, in particular for hydraulic actuation of a component and transmission lubrication or transmission cooling for a motor vehicle, and to an assembly comprising a hydraulic unit.

Some motor vehicle transmissions require both an actuating device for a clutch and an active lubrication and/or cooling system for the transmission. Instead of a clutch, the hydraulic actuator can also actuate a transmission actuator or any other component which is actuated by a hydraulic pressure, for example a park-lock or a gearshifter or a disconnect.

It is known to use a single hydraulic unit both for the transmission lubrication and for the hydraulic clutch actuation. In a first operating mode, the hydraulic unit conveys lubricating oil to the transmission, and in a second operating mode, the hydraulic unit conveys the lubricating oil serving as hydraulic fluid to a hydraulic actuator for the clutch actuation. An example of a hydraulic unit of this type can be found in DE 10 2018 007 459 A1.

Hydraulic units of this type have a fluidically complex construction. In addition, a reaction time when resetting the hydraulic actuator in the known hydraulic units is relatively long as a result of the inertia of the hydraulic fluid.

The invention is therefore based on the object of providing a hydraulic unit for actuating a hydraulic actuator and for lubricating the transmission for a motor vehicle, which unit allows the shortest possible reaction time when resetting the actuator and has a simple construction at the same time.

This object is achieved according to the invention by a hydraulic unit comprising a reversing pump which has two pump connections which act as a suction connection and a pressure connection depending on the direction of rotation. The hydraulic unit has at least one suction intake for the intake of hydraulic fluid, wherein, starting from the suction intake, a suction line portion extends to each of the pump connections, and a non-return valve blocking in the direction towards the suction intake is arranged in each of the suction line portions. Starting from a first pump connection, a first pressure line extends to a lubricant connection of the hydraulic unit, wherein a non-return valve blocking in the direction towards the pump connection is arranged in the first pressure line. Starting from a second pump connection, a second pressure line leads to an actuator connection of the hydraulic unit, wherein the second pressure line is free of valves.

As a result of the fact that the second pressure line is free of valves, the construction of the hydraulic unit is particularly simple and cost-effective.

Another advantage is the fact that, in an operating mode of the hydraulic unit in which the second pump connection of the reversing pump acts as a suction connection, a negative pressure is generated at the actuator connection. A reaction time of a connected actuator is thus improved. In particular, a resistance caused by the inertia of the hydraulic fluid is reduced. Furthermore, the negative pressure ensures that air in the line can escape via the reversing pump and thus simultaneously carries out a ventilation of the pressure line.

The reversing pump is for example a rotary vane pump, a gear pump, an annular gear pump or a gerotor pump. Such pumps have a simple construction and can operate equally efficiently in both conveying directions.

The reversing pump has for example an electric motor. This has the advantage that, by simply controlling the speed of the electric motor, the delivery rate of hydraulic fluid required for the respective object of transmission lubrication or actuation can be adjusted.

Furthermore, the object is achieved according to the invention by an assembly comprising a hydraulic unit according to the invention and a hydraulic actuator which is connected to the actuator connection of the hydraulic unit. In an assembly of this type, the hydraulic unit can be used both for transmission lubrication and for actuation. The hydraulic actuator can be for example a clutch actuator, a hydraulic park-lock actuator, a hydraulic gearshifter actuator, a hydraulic disconnect actuator. In a general way the hydraulic actuator can actuate a transmission actuator or any other component which is actuated by a hydraulic pressure.

According to one embodiment, the hydraulic actuator is a single-acting hydraulic piston which works against a return spring. The return spring additionally contributes to a negative pressure generated at the actuator connection so that the hydraulic actuator resets quickly after an actuation.

Preferably, a locking bolt is provided which interacts with the hydraulic piston. The locking bolt is used to lock the hydraulic actuator in an actuating position. As a result, the hydraulic actuator can then also be held in an actuating position when the second pump connection acts as a suction connection, and a negative pressure prevails at the actuator connection.

A solenoid can be assigned to the locking bolt. By means of the solenoid, an actuating mechanism of the locking bolt can be produced in a simple manner. In particular, electronic control of the locking bolt is possible.

The assembly comprises for example a clutch, a park-lock, a gearshifter or a disconnect which can be actuated by the hydraulic actuator. A clutch system allows to transmit or not a torque. A park-lock system allows to lock or not a gearbox. A disconnect system allows the axle drive to be connected and disconnected on demand. A gearshift system allows to change the transmission ratios.

An oil cooler is preferably arranged in the pressure line which extends to the lubricant connection. This improves the cooling effect of the hydraulic oil.

According to one embodiment, there is a bypass to the oil cooler, wherein a non-return valve blocking in the direction towards the pump connection is arranged in the bypass. A pressure acting in the oil cooler can be limited by means of the additional bypass, since, when the pressure is high enough, the non-return valve in the bypass opens, and hydraulic oil additionally reaches the lubricant connection via the bypass.

Further advantages and features of the invention can be found in the following description and from the accompanying drawings, to which reference is made. In the drawings:
- Figure 1 schematically shows an assembly according to the invention comprising a hydraulic unit according to the invention,
- Figure 2 shows the assembly from Figure 1, in which the hydraulic unit is in a first operating mode,
- Figure 3 shows the assembly from Figure 1, in which the hydraulic unit is in a second operating mode.

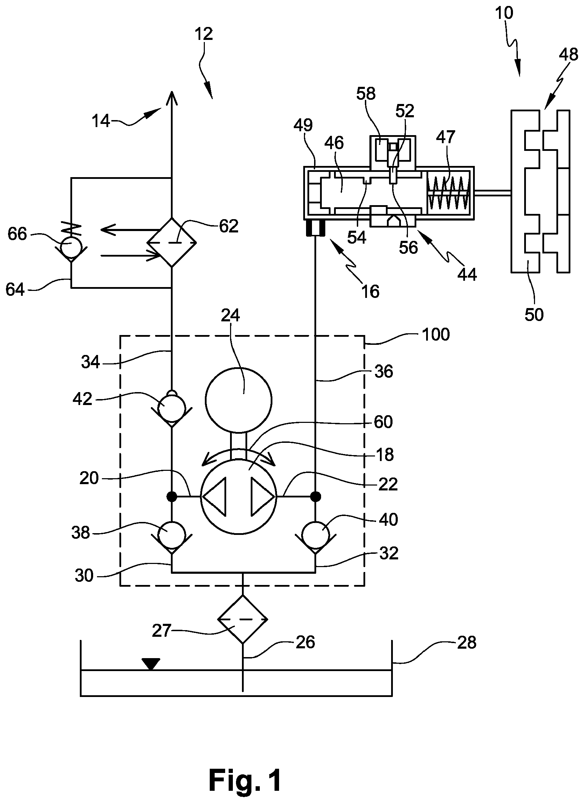

Figure 1 shows an assembly 10 for a motor vehicle, comprising a hydraulic unit 12 which is used for hydraulic clutch actuation and transmission lubrication.

For this purpose, the hydraulic unit 12 can be operated in a first operating mode for clutch actuation and in a second operating mode for transmission lubrication, as will be described further in the following.

In particular, by means of the hydraulic unit 12, hydraulic fluid can be conveyed to a lubricant connection 14 or to an actuator connection 16.

The hydraulic unit 12 has a reversing pump 18 having two pump connections 20, 22. The pump connections 20, 22 can act as a suction connection and a pressure connection depending on the direction of rotation of the reversing pump 18.

An electric motor 24 which can operate the reversing pump 18 in both operating directions is assigned to the pump.

The reversing pump 18 is for example a rotary vane pump, a gear pump, an annular gear pump or a gerotor pump.

The hydraulic unit 12 has a suction intake 26 for the intake of hydraulic fluid.

A filter 27 is provided at the suction intake 26.

In the exemplary embodiment, a storage container 28 which contains hydraulic fluid is provided, wherein the suction intake 26 is arranged in the storage container 28. However, it is also conceivable for hydraulic fluid to be taken in directly from a transmission.

Starting from the suction intake 26, in each case one suction line portion 30, 32 extends to each of the pump connections 20, 22.

Starting from a first pump connection 20, a first pressure line 34 extends to the lubricant connection 14 of the hydraulic unit 12.

Starting from a second pump connection 22, a second pressure line 36 extends to the actuator connection 16 of the hydraulic unit 12.

A non-return valve 38, 40 blocking in the direction towards the suction intake 26 is arranged in each of the suction line portions 30, 32.

Another non-return valve 42, which blocks in the direction towards the pump connection 20, is arranged in the pressure line 34 extending from the first pump connection 20 to the lubricant connection 14.

However, the pressure line 36 leading from the second pump connection 22 to the actuator connection 16 is free of valves.

In the exemplary embodiment shown, a hydraulic actuator 44 is connected to the actuator connection 16. The hydraulic actuator 44 is a clutch actuator.

The clutch actuator 44 is a single-acting hydraulic piston 46 which works against a return spring 47.

The hydraulic piston 46 is linearly guided in a housing 49.

By means of the clutch actuator 44, a clutch 48 of the assembly 10 can be actuated, which in the exemplary embodiment is a dog clutch. For this purpose, the hydraulic piston 46 is operatively connected to a clutch sleeve 50 of the clutch 48.

The hydraulic piston 46 can be locked by means of a locking bolt 52 which interacts with the hydraulic piston 46.

For the purpose of locking, the locking bolt 52 engages in radial notches 54, 56 in the hydraulic piston 46.

The notches 54, 56 are arranged in such a way that, when the locking bolt 52 engages in the first notch 54, the hydraulic piston 46 is held in an actuating position in which the clutch 48 is closed, and when the locking bolt 52 engages in the second notch 56, the hydraulic piston 46 is held in an open position in which the clutch 48 is open.

A solenoid 58 is assigned to the locking bolt 52. When supplying current to the solenoid 58, the locking bolt 52 can be lifted to release the hydraulic piston 46.

In order to simultaneously bring about particularly efficient cooling during the lubrication of the transmission, an oil cooler 62 is arranged in the pressure line 34 which extends to the lubricant connection 14.

In addition, there is a bypass 64 to the oil cooler 62, a non-return valve 66 which blocks in the direction towards the pump connection 20 being arranged in the bypass 64.

The bypass 64 makes it possible to convey a greater volume flow rate of hydraulic fluid to the lubricant connection 14 than would be possible by means of the oil cooler 62.

In this case, the non-return valve 66 prevents hydraulic fluid from returning from the outlet of the oil cooler 62 to the pump connection 20.

A pump module 100 comprises the electric motor 24, the pump 18 and the three check valves 38, 40, 42.

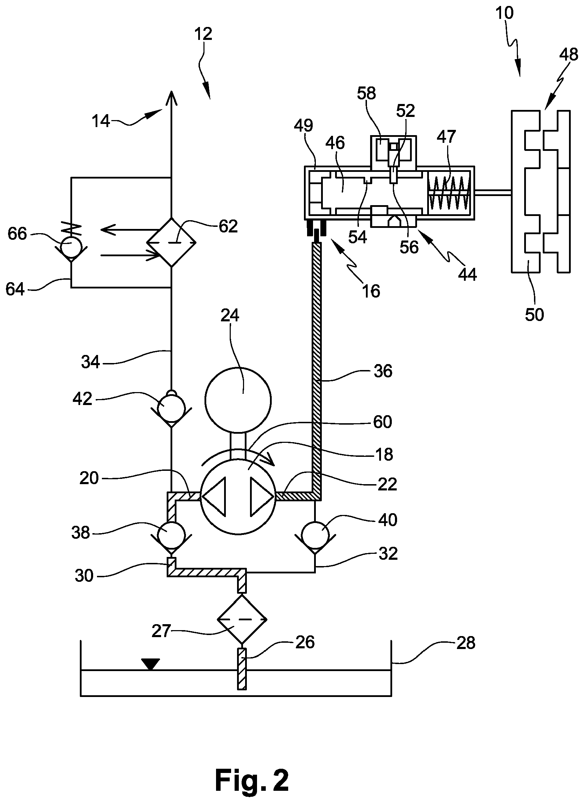

Figure 2 illustrates the assembly 10 in which the hydraulic unit 12 is operated in a first operating mode for clutch actuation.

A direction of rotation of the reversing pump 18 is illustrated by an arrow 60.

In this case, the first pump connection 20 acts as a suction connection, and the second pump connection 22 acts as a pressure connection.

In Figure 2, the fluid-conveying lines are shown in a reinforced manner by way of illustration.

The reversing pump 18 takes in hydraulic fluid via the first suction line portion 30 and conveys this fluid to the actuator connection 16 so that a fluid pressure at the actuator connection 16 increases.

The non-return valve 40 blocking in the direction towards the suction intake 26 in the second suction line portion 32 prevents hydraulic fluid from being conveyed directly back into the storage container 28.

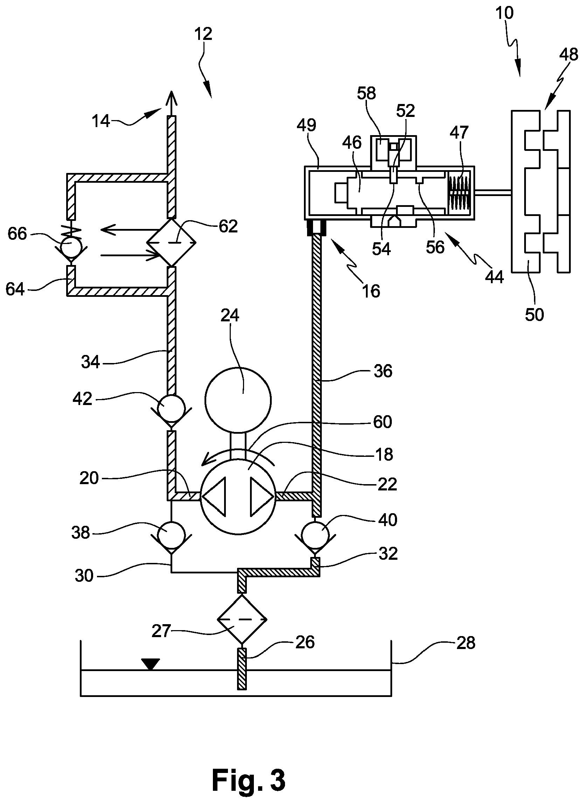

As soon as the locking bolt 52 releases the hydraulic piston 46, the hydraulic piston, which is shown in the open position thereof in Figure 2, moves into the actuating position (see Figure 3) and closes the clutch 48.

Figure 3 illustrates the assembly 10 in which the hydraulic unit 12 is operated in a second operating mode for transmission lubrication and/or transmission cooling.

In this case, the second pump connection 22 acts as a suction connection, and the first pump connection 20 acts as a pressure connection.

In Figure 3, the fluid-conveying lines are also shown in a reinforced manner by way of illustration.

The reversing pump 18 takes in hydraulic fluid via the second suction line portion 32 and conveys this fluid to the lubricant connection 14, from where the hydraulic fluid reaches a transmission to be lubricated.

In this case, the non-return valve 38 blocking in the direction towards the suction intake 26 in the first suction line portion 30 prevents hydraulic fluid from being conveyed directly back into the storage container 28.

At the same time, as a result of the fact that there are no valves in the second pressure line 36, hydraulic fluid is taken in from the pressure line 36, and therefore a negative pressure is produced at the actuator connection 16. A resistance when resetting the hydraulic piston 46 is thus reduced, as a result of which the reaction rate increases, and the pressure line 36 and the hydraulic piston 46 are ventilated by means of the reversing pump 60.

This means that, as soon as the locking bolt 52 releases the hydraulic piston 46 held in the actuating position, said bolt can be moved into the open position thereof particularly quickly by means of the return force of the return spring 47. In this manner, opening behaviour of the clutch 48 is improved.

## Claims

1. Hydraulic unit (12) comprising a reversing pump (18) which has two pump connections (20, 22) which act as a suction connection and a pressure connection depending on the direction of rotation, at least one suction intake (26) for the intake of hydraulic fluid, wherein starting from the suction intake (26), a suction line portion (30, 32) extends to each of the pump connections (20, 22) and a non-return valve (38, 40) blocking in the direction towards the suction intake (26) is arranged in each of the suction line portions (30, 32), wherein starting from a first pump connection (20), a first pressure line (34) extends to a lubricant connection (14) of the hydraulic unit (12), wherein a non-return valve (42) blocking in the direction towards the pump connection is arranged in the first pressure line (34) and wherein starting from a second pump connection (22), a second pressure line (36) leads to an actuator connection (16) of the hydraulic unit (12), wherein the second pressure line (36) is free of valves.

2. Hydraulic unit (12) according to claim 1, **characterized in that** the reversing pump (18) is a rotary vane pump, a gear pump, an annular gear pump or a gerotor pump.

3. Hydraulic unit (12) according to any of the preceding claims, **characterized in that** the reversing pump (18) has an electric motor (24).

4. Assembly (10), comprising a hydraulic unit (12) according to any of the preceding claims and a hydraulic actuator (44) which is connected to the actuator connection (16) of the hydraulic unit (12).

5. Assembly (10) according to claim 4, **characterized in that** the hydraulic actuator (44) is a single-acting hydraulic piston (46) which works against a return spring (47).

6. Assembly (10) according to claim 5, **characterized in that** a locking bolt (52) is provided which interacts with the hydraulic piston (46).

7. Assembly (10) according to claim 6, **characterized in that** a solenoid (58) is assigned to the locking bolt (52).

8. Assembly (10) according to any of claims 4 to 7, **characterized in that** the assembly (10) comprises a clutch, a park-lock, a gearshifter or a disconnect which can be actuated by the hydraulic actuator (44).

9. Assembly according to any of claims 4 to 8, **characterized in that** an oil cooler (62) is arranged in the pressure line (34) which extends to the lubricant connection (14).

10. Assembly (10) according to claim 9, characterized that there is a bypass (64) to the oil cooler (62), a non-return valve (66) which blocks in the direction towards the pump connection (20) being arranged in the bypass (64).
